# FASCICULE DE BREVET EUROPEEN

(11) **EP 3 741 496 B1**
(45) Date de publication et mention de la délivrance du brevet: **30.03.2022**
(21) Numéro de dépôt: 20156983.7
(22) Date de dépôt: 12.02.2020
(51) Int. Cl.: B23K 26/342, B23K 26/12, B23K 26/14

(54) **DISPOSITIF D'IMPRESSION TRIDIMENTIONNELLE**
DREIDIMENSIONALE DRUCKVORRICHTUNG
TRIDIMENSIONAL PRINTING DEVICE

(30) Priorité: 13.02.2019 FR 1901438
(43) Date de publication de la demande: 25.11.2020
(73) Titulaire: SAFRAN AIRCRAFT ENGINES, 75015 Paris (FR)
(72) Inventeur: GRALL, Terence, 77550 MOISSY-CRAMAYEL (FR); COLAS, Cédric, Pierre, Jacques, 77550 MOISSY-CRAMAYEL (FR); SISTACH, Hugo, 77550 MOISSY-CRAMAYEL (FR)
(74) Mandataire: Ernest Gutmann - Yves Plasseraud S.A.S.

(56) Documents cités:
- CN-A- 103 862 046
- US-A1- 2002 117 485
- US-A1- 2016 228 988

## Description

### Domaine technique de l'invention

La présente invention concerne le domaine des dispositifs d'impression tridimensionnelle (3D), et en particulier un dispositif d'impression tridimensionnelle par dépôt métallique conformément au préambule de la revendication 1 (voir par exemple US 2016/228988 A1).

### Etat de la technique antérieure

L'impression tridimensionnelle selon le procédé dit LMD (Laser Métal Déposition) consiste à déposer successivement des couches minces de métal fondu.

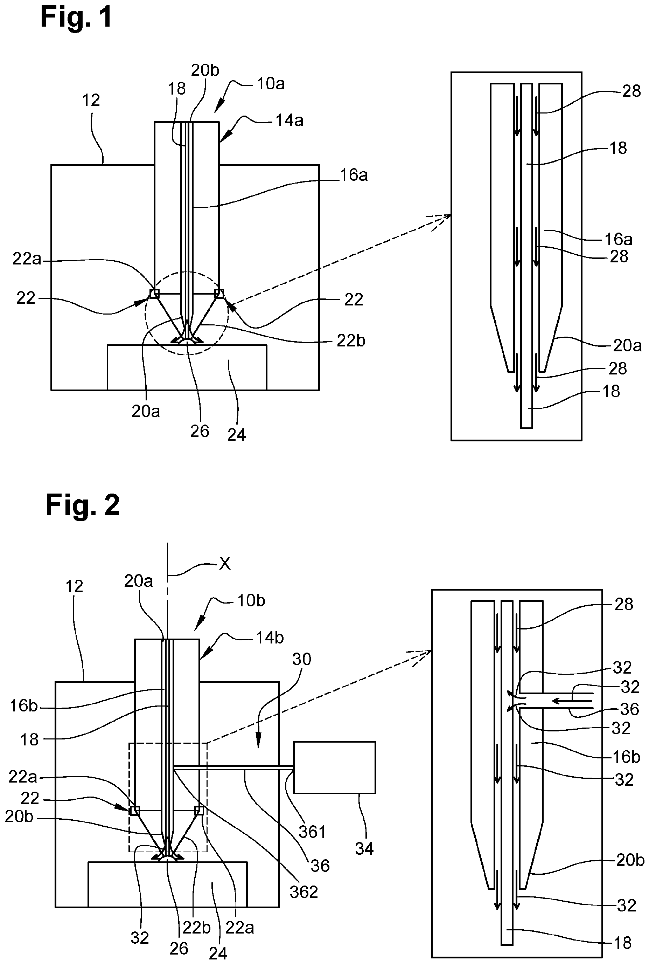

La figure 1 représente un dispositif d'impression 10a LMD d'un type connu, comportant une enceinte 12 sous atmosphère inerte, une tête 14a comportant un conduit 16a longitudinal destiné au guidage d'un fil métallique 18. La tête 14a débouche dans l'enceinte 12 et présente un corps allongé tubulaire dont une extrémité distale 20a est reliée à une buse de sortie du fil métallique 18. Le conduit de guidage 16a du fil métallique 18 est monté dans le corps allongé tubulaire de la tête 14a. Ce conduit de guidage 16a comprend une portion d'extrémité distale 20a formant la buse de sortie du fil 18.

Le fil métallique 18 sortant de la tête 14a est chauffé par des moyens de chauffage 22 portés par la tête 14a. Ces moyens de chauffage sont constitués de lasers orientés de manière à faire fondre le fil métallique 18 sortant du conduit. Ces moyens de chauffage comprennent des moyens d'émission d'un ou plusieurs faisceaux laser 22b à haute température qui viennent impacter et faire fondre le fil métallique 18.

En fonctionnement, le fil métallique 18 est introduit au niveau d'une extrémité proximale 20b du conduit de guidage 16a et se déplace à l'intérieur et le long du conduit de guidage 16a. Un jeu annulaire doit être prévu entre une face annulaire interne du conduit de guidage 16a et une surface annulaire externe du fil 18 pour permettre son déplacement jusqu'à l'extrémité distale 20a du conduit 16a. Une fois le fil sorti de la buse, ce dernier est chauffé par les moyens de chauffage 22. Ce chauffage, réalisé à distance de la buse de sortie, par le faisceaux laser permet de faire fondre le fil métallique 18. Le fil, dans un état fondu, est appliqué continument sur un substrat 24 ou sur une des couches minces de métal fondu 26 préalablement appliquées pour former la pièce tridimensionnelle souhaitée.

Un tel procédé d'impression conduit à une difficulté liée à l'introduction d'air 28 extérieur dans l'enceinte 12 par le biais du conduit de guidage 16a.

Plus précisément, cette difficulté concerne l'introduction d'un flux d'air 28 extérieur dans le conduit de guidage 16 depuis l'extérieur du conduit, cet air débouchant ensuite par le biais de la buse de sortie dans l'enceinte 12. Cet air 28 vient polluer l'enceinte 12 sous atmosphère inerte et oxyder les couches minces de métal fondu 26 superposées pour réaliser une pièce à imprimer.

L'invention vise à réaliser un dispositif d'impression tridimensionnelle, répondant au problème précité de la technique antérieure.

### Résumé de l'invention

Ainsi, la présente invention concerne un dispositif d'impression tridimensionnelle par dépôt métallique tel que défini dans la revendication 1, comprenant un conduit de guidage d'un fil métallique débouchant à l'intérieur d'une enceinte sous atmosphère inerte, caractérisé en ce que le dispositif comprend des moyens d'injection d'un gaz inerte dans le conduit de guidage.

La présence de moyens d'injection d'un gaz inerte dans le conduit de guidage du fil métallique permet de générer une surpression dans le conduit et d'empêcher l'air externe introduit dans celui-ci d'atteindre l'extrémité distale du conduit par laquelle le fil métallique sort. Cette surpression générée dans le conduit de guidage empêche ainsi l'air externe de pénétrer dans l'enceinte sous atmosphère inerte et d'oxyder des couches minces de métal fondu de métal déposée sur un substrat ou sur d'autres couches minces de métal fondu préalablement déposées.

Les moyens d'injection peuvent comprendre un conduit d'amenée de gaz inerte dont une extrémité aval débouche dans le conduit et une extrémité amont est reliée à des moyens d'alimentation en gaz inerte.

Les moyens d'injection d'un gaz inerte comprennent un conduit d'amenée de gaz inerte qui est en liaison fluidique avec le conduit de guidage du fil et avec des moyens d'alimentation en gaz inerte qui alimente le conduit d'amenée du gaz inerte en une extrémité amont. Le gaz inerte traverse le conduit d'amenée jusqu'à déboucher à son extrémité aval dans le conduit de guidage.

Le conduit de guidage est sensiblement rectiligne.

L'angle précité est formé, conformément à la présente invention, entre une première portion rectiligne du conduit de guidage et une seconde portion rectiligne du conduit de gaz inerte, la première portion rectiligne s'étendant depuis l'extrémité distale du conduit de guidage jusqu'au niveau du débouché du conduit d'amenée de gaz inerte dans le conduit de guidage et la seconde portion rectiligne étant reliée au débouché du conduit d'amenée de gaz inerte dans le conduit de guidage.

L'orientation du débouché du conduit d'amenée de gaz inerte permet de générer une surpression dans le conduit de guidage du fil, bloquant le flux d'air extérieur introduit dans le conduit de guidage du fil. De cette manière, le conduit de guidage du fil est dépourvu d'air riche en oxygène entre la surpression générée et son extrémité distale, c'est-à-dire à l'intérieur de l'enceinte. Une telle disposition de la conduite d'amenée de gaz inerte permet de limiter l'introduction d'air dans l'enceinte à de l'air inerte.

Par ailleurs, pour encore mieux éviter l'introduction d'air extérieur, conformément à l'invention, cet angle est strictement inférieur à 90°. De cette manière, le débit d'air sortant du conduit d'amenée est pour une majeure partie orientée vers l'extrémité du conduit de guidage débouchant à l'extérieur de l'enceinte.

Les moyens d'injection peuvent être configurés pour injecter le gaz inerte avec un débit compris entre 2 et 6 bars.

Un débit de gaz inerte compris entre 2 et 6 bars permet de générée une surpression et de stopper le déplacement de l'air extérieur dans le conduit de guidage du fil métallique.

Le gaz inerte peut être de l'argon ou de l'azote. Ce gaz permet d'éviter toute réaction avec la pièce et/ou le matériau déposé et permet donc d'éviter toute contamination liée à l'atmosphère extérieure.

Le dispositif peut encore comprendre des moyens de chauffage aptes faire fondre le fil métallique.

Ces moyens de chauffage peuvent être logés dans une tête comportant les moyens de chauffage lesquels sont agencés autour du conduit de guidage du fil métallique.

Les moyens de chauffage peuvent comprendre un ou plusieurs moyens d'émission d'un faisceau laser, les faisceaux laser convergeant en un point donné d'application du fil métallique.

La tête de support des moyens de chauffage peut être structurellement distincte du conduit de guidage du fil métallique.

L'invention sera mieux comprise et d'autres détails, caractéristiques et avantages de l'invention apparaîtront à la lecture de la description suivante faite à titre d'exemple non limitatif en référence aux dessins annexés.

### Brève description des figures

[Fig. 1] est une vue schématique d'un dispositif d'impression tridimensionnelle selon l'art antérieur, décrite précédemment,
[Fig. 2] est une vue schématique d'un dispositif d'impression tridimensionnelle
[Fig. 3] est une vue schématique d'un dispositif conforme à la présente invention, représentant une variante de la figure 2,
[Fig. 4] est une vue schématique d'un dispositif conforme à la présente invention, représentant encore une autre variante.

### Description détaillée de l'invention

Le dispositif 10b d'impression tridimensionnelle comprend une enceinte 12 sous atmosphère inerte, des moyens 30 d'injection de gaz inerte 32 et une tête 14b comportant un conduit de guidage 16b d'un fil métallique 18. La tête 14b débouche dans l'enceinte 12, et présente un corps allongé tubulaire dans lequel est monté le conduit tubulaire de guidage 16b du fil métallique 18. La tête 14b, et plus précisément le conduit de guidage 16b logé dans la tête 14b, présentent une extrémité distale 20a qui est reliée à une buse de sortie du fil.

Les moyens 30 d'injection de gaz inerte 32 comprennent un conduit d'amenée du gaz inerte 36 qui est relié à des moyens d'alimentation 34. Le gaz inerte 32 entre dans le conduit d'amenée 36 à partir d'une extrémité amont 361 du conduit, reliée aux moyens d'alimentation 34, et débouche dans le conduit de guidage 16b du fil à partir d'une extrémité aval 362 du conduit d'amenée.

Le conduit de guidage 16b du fil est sensiblement rectiligne et s'étend selon une direction d'allongement X. Le conduit d'amenée 36 de gaz inerte débouche, à son extrémité aval 362, selon une direction sensiblement perpendiculaire à la direction d'allongement X du conduit de guidage 16b du fil.

Les moyens d'injection 30 sont configurés pour injecter le gaz inerte 32 avec un débit compris entre 2 et 6 bars.

Lorsque le gaz inerte 32 est injecté avec un débit compris entre 2 et 6 bars, dans le conduit d'amené 36 du gaz inerte, le gaz inerte 32 introduit dans le conduit de guidage 16b du fil génère une surpression dans le conduit de guidage du fil. La surpression engendrée par l'injection de gaz inerte 32 empêche l'air extérieur 28 s'étant introduit dans le conduit de guidage 16b de se déplacer au-delà de la surpression. Ainsi, le conduit de guidage 16b du fil présente, entre la surpression et l'extrémité distale 20a du conduit de guidage 14b, un fluide dépourvu d'oxygène.

Dans un mode de réalisation particulier, la tête 14b présente, entre la zone du conduit de guidage 16b destinée à être en surpression et la buse de sortie du fil, des ouvertures débouchantes (non représentées). Les ouvertures débouchantes permettent une communication fluidique du conduit de guidage 16b avec l'enceinte.

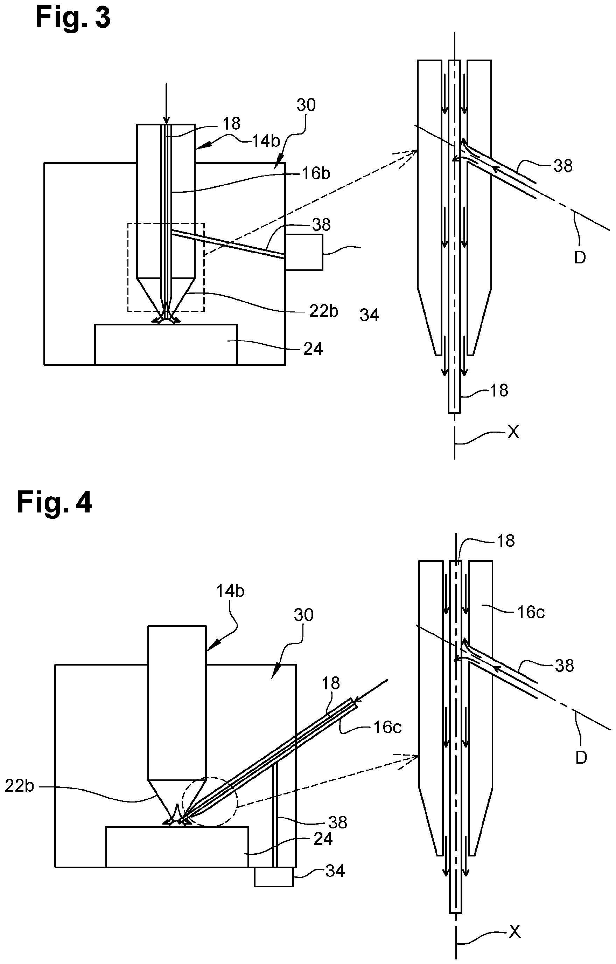

On se réfère maintenant à la figure 3 qui est une réalisation conforme à la présente invention, variation de la réalisation représentée en figure 2. Elle diffère de cette précédente réalisation en ce que le conduit d'amenée de gaz inerte n'est pas orienté à 90° par rapport au conduit de guidage du fil. En effet, on observe que l'extrémité aval 362 du conduit d'amenée 38 de gaz inerte débouche selon une direction D, formant à son extrémité aval un angle inférieur à 90° avec la direction d'allongement X du conduit de guidage au niveau du débouché du conduit d'amené de gaz inerte dans le conduit de guidage, et ce conformément à la présente invention.

Cette orientation inférieure à 90° permet de privilégier une orientation du flux de gaz inerte vers l'extrémité du conduit de guidage qui est opposée à celle agencée à l'intérieur de l'enceinte 30.

La réalisation de la figure 4 représente une autre réalisation conforme à la présente invention, dans laquelle le conduit de guidage 16c est distinct structurellement de la tête 16b portant les moyens de chauffage 22b.

Ainsi, on observe que le conduit de passage n'est pas monté dans un corps tubulaire allongé comme dans la réalisation de la figure 1.

## Revendications

1. Dispositif (10b) d'impression tridimensionnelle par dépôt métallique comprenant une enceinte (12) sous atmosphère inerte en utilisation et un conduit de guidage (16b) d'un fil métallique (18) débouchant à l'intérieur de l'enceinte (12) (12) sous atmosphère inerte, **caractérisé en ce que** le dispositif comporte des moyens d'injection (30) d'un gaz inerte (32) dans le conduit de guidage (16b), lesdits moyens d'injection (30) comprenant un conduit d'amenée (36) de gaz inerte dont une extrémité aval (362) débouche dans le conduit (16b) et une extrémité amont (361) est reliée en utilisation à des moyens d'alimentation (34) en gaz inerte, le conduit de guidage (16b) est sensiblement rectiligne, l'extrémité aval (362) du conduit d'amenée (36) de gaz inerte s'étendant selon une direction formant un angle strictement inférieur à 90° avec une direction d'allongement (X) du conduit de guidage au niveau du débouché du conduit d'amené (36) de gaz inerte dans le conduit de guidage (16b), l'angle étant formé entre une première portion rectiligne du conduit de guidage et une seconde portion rectiligne du conduit d'amenée de gaz inerte, la première portion rectiligne s'étendant depuis l'extrémité distale du conduit de guidage jusqu'au niveau du débouché du conduit d'amenée de gaz inerte dans le conduit de guidage et la seconde portion rectiligne étant reliée au débouché du conduit d'amenée de gaz inerte dans le conduit de guidage.

2. Dispositif (10b) selon la revendication 1, dans lequel les moyens d'injection (30) sont configurés pour injecter en utilisation le gaz inerte (32) avec un débit compris entre 2 et 6 bars.

3. Dispositif selon l'une des revendications précédentes, dans lequel en utilisation le gaz inerte (32) est de l'argon ou de l'azote.

4. Dispositif selon l'une des revendications 1à 3, comprenant des moyens de chauffage aptes à faire fondre le fil métallique.

5. Dispositif selon la revendication 4, dans lequel il comprend une tête comportant les moyens de chauffage lesquels sont agencés autour du conduit de guidage du fil (18) métallique.

6. Dispositif selon la revendication 4, dans lequel les moyens de chauffage comprennent un ou plusieurs moyens d'émission d'un faisceau laser (22b), les faisceaux laser convergeant en un point donné d'application du fil (18) métallique.

## Patentansprüche

1. Vorrichtung (10b) zum dreidimensionalen Drucken durch Metallauftrag mit einer Umschließung (12), die während der Verwendung unter inerter Atmosphäre steht, und einem Führungskanal (16b) für einen Metalldraht (18), der in die unter Inertatmosphäre stehende Umschließung (12) führt, **dadurch gekennzeichnet, dass** die Vorrichtung Mittel (30) zum Einleiten eines Inertgases (32) in den Führungskanal (16b) umfasst, wobei die Einleitungsmittel (30) eine Leitung (36) zum Zuführen von Inertgas umfassen, deren stromabwärtiges Ende (362) in den Kanal (16b) führt und deren stromaufwärtiges Ende (381) während der Verwendung mit Mitteln (34) zur Zufuhr von Inertgas verbunden ist, wobei der Führungskanal (16b) im Wesentlichen geradlinig ist, sich das stromabwärtige Ende (362) der Inertgaszuleitung (36) in einer Richtung erstreckt, die einen Winkel deutlich kleiner 90° zu einer Erstreckungsrichtung (X) des Führungskanals in Höhe der Mündung der Inertgaszuleitung (36) in den Führungskanal (16b) bildet, wobei der Winkel zwischen einem ersten geradlinigen Abschnitt des Führungskanals und einem zweiten geradlinigen Abschnitt der Inertgaszuleitung gebildet wird, wobei sich der erste geradlinige Abschnitt vom distalen Ende des Führungskanals bis zur Mündung der Inertgaszuleitung in den Führungskanal erstreckt und der zweite geradlinige Abschnitt mit der Einmündung der Inertgaszuleitung in den Führungskanal verbunden ist.

2. Vorrichtung (10b) nach Anspruch 1, bei der die Einleitungsmittel (30) so gestaltet sind, dass sie das Inertgas (32) während der Verwendung mit einem Durchsatz zwischen 2 und 6 bar einleiten.

3. Vorrichtung nach einem der vorhergehenden Ansprüche, in der während der Verwendung Argon oder Stickstoff als Inertgas (32) benutzt wird.

4. Vorrichtung nach einem der Ansprüche 1 bis 3 mit Heizmitteln, die den Metalldraht zum Schmelzen bringen können.

5. Vorrichtung nach Anspruch 4, in der sie einen Kopf mit Heizmitteln umfasst, die um den Führungskanal des Metalldrahts (18) angeordnet sind.

6. Vorrichtung nach Anspruch 4, in der die Heizmittel ein oder mehrere Mittel zur Emission eines Laserstrahls (22b) umfassen, wobei die Laserstrahlen an einem bestimmten Anlegepunkt des Metalldrahts (18) zusammenlaufen.

## Claims

1. A device (10b) for three-dimensional printing by metal deposition comprising an enclosure (12) under an inert atmosphere in operation and a conduit (16b) for guiding a metal wire (18) opening into the enclosure (12) under an inert atmosphere, **characterized in that** the device comprises means (30) for injecting an inert gas (32) into the guide conduit (16b) said injection means (30) comprising an inert gas supply conduit (36), a downstream end (362) of which opens into the conduit (16b) and an upstream end (361) of which is connected in operation to inert gas supply means (34), the guide conduit (16b) is substantially straight, the downstream end (362) of the inert gas supply conduit (36) extending in a direction forming an angle strictly less than 90° with a direction of elongation (X) of the guide conduit at the outlet of the inert gas supply conduit (36) into the guide conduit (16b), the angle being comprised between a first rectilinear portion of the guide conduit and a second rectilinear portion of the inert gas supply conduit, the first rectilinear portion extending from the distal end of the guide conduit to the outlet of the inert gas supply conduit into the guide conduit and the second rectilinear portion joining the outlet of the gas supply conduit into the guide conduit.

2. A device (10b) according to one of the preceding claims, wherein the injection means (30) are configured to inject in operation the inert gas (32) with a flow rate between 2 and 6 bar.

3. A device according to one of the preceding claims, wherein in operation the inert gas (32) is argon or nitrogen.

4. A device according to one of claims 1 to 3, comprising heating means capable of melting the wire.

5. A device according to claim 4, wherein it comprises a head comprising heating means which are arranged around the metal wire guide conduit (18).

6. A device according to claim 4, wherein the heating means comprise one or more means for emitting a laser beam (22b), the laser beams converging at a given point of application of the metal wire (18).
